Europäisches Patentamt

**European Patent Office**

**Office européen des brevets**

(19)

(11) Publication number: **0 350 992**
**A1**

## (12) EUROPEAN PATENT APPLICATION

(21) Application number: **89201746.8**

(22) Date of filing: **30.06.89**

(51) Int. Cl.⁴: **G01N 1/22**

(30) Priority: **04.07.88 NL 8801682**

(43) Date of publication of application:
**17.01.90 Bulletin 90/03**

(84) Designated Contracting States:
**AT BE CH DE ES FR GB IT LI LU NL SE**

(71) Applicant: **DUPHAR INTERNATIONAL RESEARCH B.V**
**C.J. van Houtenlaan 36**
**NL-1381 CP Weesp(NL)**

(72) Inventor: **Nieuwenhuizen, Maarten S.**
**c/o Lange Kleiweg 137**
**Rijswijk (ZH)(NL)**
Inventor: **Wils, Eric R.J.**
**c/o Lange Kleiweg 137**
**Rijswijk (ZH)(NL)**

(74) Representative: **Swaters, Pieter D. et al**
**OCTROOIBUREAU ZOAN B.V. P.O. Box 140**
**NL-1380 AC Weesp(NL)**

(54) Method of air sampling.

(57) The invention relates to a method of air sampling by means of an adsorption tube provided with break seals at both ends, the adsorbent being positioned within the tube in such manner that the distance between the adsorbent and a first end break seal is a few millimeters at most. The method comprises the steps of opening one end of the tube by breaking the tube at the first end break seal, passively exposing the adsorbent to the air to be sampled and then reclosing the tube with a sealing cap. The invention further relates to a method of detecting and/or identifying air contaminants by taking an air sample as above, by afterwards removing the sealing cap and breaking the tube at the second end break seal, followed by desorbing and analysing the contaminants.

FIG.1

EP 0 350 992 A1

# Method of air sampling

The invention relates to a method of taking an air sample by means of an adsorption tube and to a method of detecting and/or identifying at least one contaminant in the air.

In order to identify unknown atmospheric contaminants, in particular toxic or harmfull components in the air, for example chemical warfare agents, or to verify the detection of known agents, air samples should be taken and be sent to a laboratory for identification. Under such circumstances, certainly upon air sampling on the battle field, it is extremely unpractical to use therefor a pump to draw the air to be sampled through a suitable adsorbent. Tubes for passive sampling then offer a good solution, because by using such tubes a pump is not necessary. The adsorbed air components should be analysed. For this purpose thermodesorption is the most efficient way to detect air contaminants in very low concentrations. By using thermodesorption very low detection limits can be achieved and moreover volatile components are not obscured by the use of solvents.

Tubes for passive sampling are known, e.g. from the Perkin-Elmer ATD-50 ® system, using stainless steel adsorption tubes. Such tubes are also disclosed in publications of Brown et al, e.g. in Am. Ind. Hyg. Assoc. J. 42, 856-869 (1981). In these known sampling tubes the absorbent is positioned in the tubular reservoir in such manner, that the air gap, i.e. the air-filled distance between the adsorbent on the one hand and the opened tube end communicating with the air to be sampled on the other, is approximately 15 mm. Apparently this is necessary in order to eliminate undesired flow effects of the air to be sampled.

Particularly when used in a detection kit for chemical warfare agents, a sampling tube is required, with the aid of which in a very short time an air sample can be taken, wherein the contaminants, if present, can be identified. of which in a very short time an air sample can be taken, wherein the contaminants, if present, can be identified.

When such a detection kit is used, various detection reactions should be carried out by the user, i.e. the soldier in the field; for these reactions only a short time is available. The time for air sampling by means of a sampling tube should therefore not exceed this short time to avoid delay of the total detection process.

Generally quantification of the concentration of air contaminants, for example the concentration of warfare agents in the air, is not necessary. However a quantitative aspect is introduced, because information on the lowest level upon which identification can still be carried out is desired. The sampling tube should fulfil the specifications required for the detection reaction in combination with the technique used for identifying chemical combat agents.

It was found that in using known tubes for passive sampling the sampling leaves to be desired in the short sampling time available, when the concentrations of the above chemical contaminants or warfare agents in the air are low. Below certain low concentrations, contaminants cannot be identified or even detected at all.

In the U.S. patent specification 4,481,297 a vapor detection tube is disclosed intended for sampling in an active way. When used, both ends of the tube are opened successively, after which a sample is drawn through the tube to collect it inside the tube on the adsorbent. Apparently the tube is packed with the adsorbent in the upright position so that the adsorbent completely fills one end portion of said tube till the break seal. The lack of an air gap at said end of the tube, however, is not relevant in the process of active air-sampling, wherein an air sample is drawn through the sampling tube, e.g. by means of a pump.

The present invention relates more in particular to a method of taking an air sample by means of an adsorption tube, which prior to use sealingly encloses an adsorbent and is provided with break seals at both ends, the adsorbent being positioned within the tube in such manner that the distance between the adsorbent and a first end break seal is a few millimeters at most, and is characterized in that the method is suitable for passive air-sampling by comprising the following subsequent steps:

(a) opening the first end of the tube by breaking the tube at said first end break seal,

(b) passively exposing said adsorbent to the air to be sampled, and

(c) reclosing said first end with a sealing cap.

As will be apparent from the examples, by using the method of the invention contaminants present in the air in very low concentrations can be sampled in a passive way within the required sampling time in quantities which are sufficient for detection. By using an adsorption tube in which the adsorbent is positioned in such manner that the said distance between the adsorbent and said first end break seal is less than one millimeter, air contaminants can even be detected in concentrations which are approx. 10 times lower than by using the known passive sampling tubes mentioned hereinbefore. The dimensions of the sampling tube to be used according to the method of the invention are not critical. Preferably, however, the length and diameter are attuned to the usual thermodesorption equipment, so that there is no need for developing special equipment, adapted to the outside dimensions of the sampling tube.

It is important, that the adsorbent is firmly kept in position in the reservoir of the sampling tube. For this purpose air-permeable disks or plugs can be used, for example disks of a metal gauze or plugs of a suitable material, preferably of glass or quartz wool.

Preferably the sampling tube to be used according to the method of the invention is manufactured from glass, because such a tube can be produced at a low price in large quantities, glass is inert to the air components to be detected and a glass tube can be sealed by melting in an easy way. A prolonged hermetical sealing of the sampling tube is in particular necessary when used in a detection kit for chemical warfare gases, wherein a storage time of at least a couple of years is required.

The sealing cap to be used for reclosing said first end of said sampling tube after an air sample has been taken should be manufactured from a suitable material which has to meet high standards of quality. A good airtight sealing is required, no vapour is allowed to escape through said cap and it is not permitted that the material of the cap itself shows any adsorption behaviour, as a result of which adsorbed air components might "migrate" from the adsorbent to the material of the cap. A slightly resilient material is preferred, preferably a synthetic material. Polyethylene is a suitable synthetic material for the sealing cap in question.

The present invention further relates to a method of detecting and/or identifying at least one contaminant in the air by taking an air sample by means of an adsorption tube and by subsequently analysing said adsorbed contaminant, and is characterized in that the method comprises the steps as mentioned hereinbefore, viz. of (a) opening the first end of the tube by breaking the tube at said first end break seal, (b) passively exposing said adsorbent to the air to be sampled, and (c) reclosing said first end with a sealing cap; followed by the additional steps of: (d) removing the sealing cap from said first end, (e) opening the second end of the tube by breaking the tube at the second end break seal, and (f) desorbing and analysing said contaminant, wherein, alternatively, said steps (d) and (e) may be carried out in the reversed sequence.

To enable the user, expecially the soldier in the field, to easily distinguish between said first end break seal and said second end break seal, the break seals are preferably distinct among themselves. As opposed to said second end break seal, said first end break seal should be provided such that it can easily be broken in order to open the tube for sampling. The second end break seal needs only to be opened afterwards, in a laboratory for analysing and identifying the adsorbed contaminant(s). In addition the first end of said sampling tube may differ visually from said second end, e.g. by a distinct colour or the like, to enable the user, in particular the soldier in the battle field, i.e. in an emergency situation, to open the first end of the sampling tube by breaking the tube at said first end break seal without hesitation.

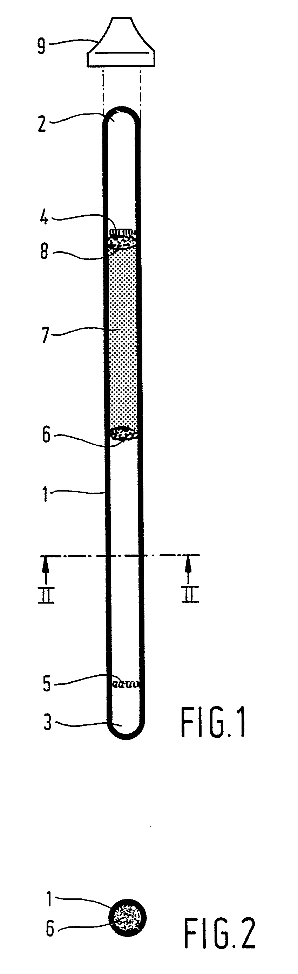

The invention will now be described in greater detail with reference to the following specific examples and will be illustrated with the help of the attached drawing. In this drawing a sampling tube to be used for the method according to the invention in a favourable embodiment is shown in longitudinal and transversal sectional views: figures 1 and 2 respectively. The glass tube 1 has been sealingly closed at both ends (at 2 and 3) by melting and is provided with a first end break seal (4) and a second end break seal (5) to allow opening of the tube by breaking the tips 2 and 3. The tube reservoir comprises and adsorbent 7, firmly kept in position between two plugs 6 and 8 of glass wool or quartz wool, or between metal (stainless steal) gauzes. The internal dimensions of the tube shown are comparable with those of the standard ATC-50 tubes, which are used in the examples by way of comparison. In the examples Tenax-TA ® is used as an adsorbent, previously purified by heating at 270° C. After sampling, the opened end (at 4) of the sampling tube can be sealed with cap 9, manufactured from a resilient synthetic material. Figure 2 shows a cross sectional view through the tube taken on the line II-II of figure 1.

EXAMPLE I

Adsorption and analysis of mustard gas in air samples.

A standard ATD-50 tube, as mentioned hereinbefore, of stainless steal is modified in such way, that the distance between the adsorbent Tenax-TA and the first end break seal to be opened for starting the sampling procedure is less than 1 millimeter. In the standard ATD-50 tubes, used by way of comparison, this distance is 15 mm. The internal dimensions of the tubes used are 90 x 5 mm. The adsorbent is enclosed between metal gauzes, unless indicated otherwise.

The sampling tubes are placed in the wall of a circular-cylindrical tube having internal dimensions of

3

1000 x 45 mm, perpendicular to the flow direction of the air to be sampled. To the air is added mustard gas, the concentration of which is measured during the adsorption experiments. The linear air velocity is also determined.

Upon starting the sampling procedure the tubes are opened at their first end break seals (where the adsorbent is positioned). The sampling tubes are then passively exposed to the air to be investigated during 10 minutes. Thereupon the tubes are sealingly closed with caps and sent to the laboratory for analysing.

The tubes are opened at both ends, i.e. the sealing cap is removed and the other end of the tube is opened by breaking the tube at the second break seal, and then connected to the analysis equipment. The analysis is carried out with a mass spectrometer combined with a gas chromatograph. The tubes are desorbed during 10 minutes at 220°C in a helium flow of 15 ml/min. using a Chrompack ® thermodesorption cold trap injector. The gas chromatograp hic separation is performed on a fused silica capillary column. The temperature programme chosen is attuned to the detection of mustard gas. the obtained peak height of the characteristic masses of mustard gas is compared with that of the standard, added to the sampling tube.

Upon investigating the chemical combat agent mustard gas in various concentrations in air the results, presented in Table A below, are obtained. A corresponding investigation with standard ATD-50 tubes serves as a comparison. In Table A the relative detected weight amount of mustard gas is tabulated, the quantity of mustard gas detected with a standard ATD-50 tube at a mustard gas concentration in the air of 3,0 mg/m³ arbitrarily being fixed at 100.

TABLE A

| sampling tube | concentration mustard gas (mg/m³) | air velocity (m/s) | relative detected amount of mustard gas | number of experiments |
|---|---|---|---|---|
| invention | 0.57 | 0.09 | 53 | 2 |
| ibid. | 0.57 | 0.53 | 147 | 2 |
| ibid. | 0.11 | 0.09 | 20 | 2 |
| ibid. | 0.11 | 0,53 | 60 | 2 |
| ibid. | 0,05 | 0.53 | 2.7 | 2 |
| ibid. | 0.05 | 0.53 | 2.0 | 2 * |
| standard ATD-50 | 3.0 | 0.18 | 100 | 4 |
| ibid. | 0.5 | 0.18 | 4.0 | 2 |
| ibid. | 0.2 | 0.18 | - | 2 |

* glass tubes with plugs of quartz wool (see figure) instead of stainless steel tubes with gauzes.

From the results presented in Table A it will be clear that there is a great difference in the detection potentialities of concentrations of mustard gas in air samples by using the sampling tubes according to the method of the invention compared to the use of standard tubes. Compared to the use of standard ATD-50 tubes, by using the sampling tubes in the method of passive sampling according to the invention mustard gas concentrations in the air can still be detected in approximately ten times lower concentrations. The found large spread between the results is also caused by the differences in linear air velocity. No great differences in results are found between the stainless steel and the glass sampling tubes.

EXAMPLE II

Detection of the gaseous chemical combat agent sarin in air samples.

In the same way as described in Example I sarin is detected in various concentrations in air samples. For the passive air sampling method according to the invention glass and stainless steel sampling tubes are used. No significant differences in results are found between stainless steel and glass sampling tubes. Upon using glass sampling tubes enclosing 100 mg adsorbent Tenax-TA between metal gauzes or plugs of quartz wool, the results presented in Table B are obtained (air velocity 0.53 m/sec)

TABLE B

| concentration sarin ($mg/m^3$) | detected amount of sarin (ng) | number of experiments |
|---|---|---|
| 0.15 | approx. 6 | 9 |
| 0.035 | approx. 1 | 7 |

As will be apparent from the above results, sarin can still easily be detected in a concentration of 0.035 mg per $m^3$ of air.

## EXAMPLE III

Detection of ClCN in air samples.

In the same way as described in Example I, ClCN is detected in air samples; glass sampling tubes are used, comprising 100 mg of Tenax-TA. At an air veloxity of 0.18 m/sec the following results are obtained (number of experiments: 8): concentration of ClCN in $mg/m^3$: 0.22; detected amount of ClCN: approx. 3 ng.

## Claims

1. Method of taking an air sample by means of an adsorption tube, which prior to use sealingly encloses an adsorbent and is provided with break seals at both ends, the adsorbent being positioned within the tube in such manner that the distance between the adsorbent and a first end break seal is a few millimeters at most, characterized in that the method comprises the steps of:
(a) opening the first end of the tube by breaking the tube at said first end break seal,
(b) passively exposing said adsorbent to the air to be sampled, and
(c) reclosing said first end with a sealing cap.
2. Method of detecting and/or identifying at least one contaminant in the air by taking an air sample by means of an adsorption tube and by subsequently analysing said adsorbed contaminant, characterized in that the method comprises the steps as claimed in claim 1, followed by the additional steps of:
(d) removing the sealing cap from said first end,
(e) opening the second end of the tube by breaking the tube at the second end break seal, and
(f) desorbing and analysing said contaminant, wherein, alternatively, said steps (d) and (e) may be carried out in the reversed sequence.

9

2

4

8

7

6

1

II          II

5

3

FIG.1

1

6

FIG.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | US-A-4 481 297 (T.A. ZUCAL et al.)<br>* Whole document *<br>--- | 1,2 | G 01 N 1/22 |
| Y | US-A-4 392 389 (W. ECKSTEIN et al.)<br>* Whole document *<br>--- | 1,2 | |
| A | GB-A-2 085 158 (DRÄGERWERK AG)<br>* Whole document *<br>--- | 1,2 | |
| A | IBM TECHNICAL DISCLOSURE BULLETIN, vol. 16, no. 3, August 1973, page 972, New York, US; T.R. MARTIN et al.: "Portable contaminant collector"<br>* Whole document *<br>----- | 1,2 | |

TECHNICAL FIELDS SEARCHED (Int. Cl.5)

G 01 N 1/00
G 01 N 30/00

The present search report has been drawn up for all claims

| Place of search | Date of completion of the search | Examiner |
|---|---|---|
| THE HAGUE | 10-10-1989 | SARNEEL A.P.T. |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

& : member of the same patent family, corresponding
 document

EPO FORM 1503 03.82 (P0401)